# EUROPÄISCHE PATENTSCHRIFT

(11) **EP 4 374 752 B1**
(45) Veröffentlichungstag und Bekanntmachung des Hinweises auf die Patenterteilung: **06.08.2025**
(21) Anmeldenummer: 23207073.0
(22) Anmeldetag: 31.10.2023
(51) Int. Cl.: A47J 36/08, A47J 27/04

(54) **KÜCHENGERÄT**
KITCHEN APPLIANCE
APPAREIL DE CUISINE

(30) Priorität: 22.11.2022 BE 202205942
(43) Veröffentlichungstag der Anmeldung: 29.05.2024
(73) Patentinhaber: Miele & Cie. KG, 33332 Gütersloh (DE)
(72) Erfinder: Diestelhorst, Tim Otis, 32257 Bünde (DE); Metz, Thomas, 32257 Bünde (DE); Lenzen, Ulrike, 32052 Herford (DE); Brinkmann, René-Pascal, 33689 Bielefeld (DE); Biemelt, Michael, 33397 Rietberg (DE); Peters, Andre, 32051 Herford (DE); Busse, Christian, 32289 Rödinghausen (DE); Thiel, Mario, 32278 Kirchlengern (DE); Wank, Klaus, 32278 Kirchlengern (DE); Hinrichs, Stefan, 32469 Petershagen (DE); Bergmeier, Tino, 32278 Kirchlengern (DE)

(56) Entgegenhaltungen:
- EP-A1- 3 470 739
- EP-A1- 3 671 042
- US-A- 2 590 942

## Beschreibung

Die Erfindung betrifft ein Küchengerät gemäß dem Patentanspruch 1.

Zur Zubereitung von Lebensmitteln, welche auch als zu behandelndes Gut oder als Gargut bezeichnet werden können, sind verschiedene Küchengeräte bekannt, welche auch als Gargeräte bezeichnet werden können. Hierzu gehören die Kochfelder, auf denen das Gargut in einem Gargeschirr wie zum Beispiel in einem Kochtopf, mit oder ohne Deckel, in einer Pfanne und dergleichen durch Kochen, Braten und dergleichen gegart werden kann.

Auch sind Gargeräte bekannt, welche einen unbeweglich, d.h. feststehend, mit dem Gargerät ausgebildeten Garraum aufweisen, in welchen das Gargut in bzw. auf einem Gargeschirr angeordnet und bei geschlossenem Garraum des Gargeräts gegart werden kann. Ein derartiges Gargerät kann zum Beispiel ein Backofen, ein Dampfgarer, eine Mikrowelle, ein Kombinationsgerät aus Backofen mit Dampfgarer und bzw. oder mit Mikrowelle und dergleichen sein. Derartige Gargeräte mit feststehendem Garraum weisen üblicherweise zumindest in Deutschland in der vertikalen Richtung eine Bauhöhe von ca. 45 cm auf, wobei Backöfen auch mit einer Bauhöhe von ca. 60 cm üblich sind.

Derartige Gargeräte mit feststehendem Garraum haben gemeinsam, dass sie ein äußeres Gehäuse als Außengehäuse aufweisen, welches das Gargerät nach außen im Wesentlichen umschließt und dessen einzelnen Bauteile und Elemente schützt sowie gemeinsam handhabbar macht. Innerhalb des Gargerätes wird ein Innenraum ausgebildet, welcher den Garraum darstellt und im Wesentlichen von einem inneren Gehäuse als Innengehäuse, auch als Garraummuffel oder Muffel bezeichnet, umschlossen wird. Zwischen dem Innengehäuse und dem Außengehäuse wird ein Gehäuseraum als Zwischenraum gebildet, in welchem Funktionselemente des Gargeräts wie zum Beispiel eine Steuerung bzw. eine Steuerungseinheit, eine elektrische Energieversorgung und sonstige Bauelemente angeordnet sein können, welche dem bestimmungsgemäßen Gebrauch des Gargerätes dienen. In der Tiefe von Vorne, d.h. aus Sicht eines Benutzers betrachtet, schließt das Außengehäuse bzw. eine Blende in Form eines Möbelmaterials oder in Form einer Bedienblende und dergleichen mit dem Innengehäuse zusammen den Gehäuseraum ab, so dass der Gehäuseraum für den Benutzer nicht zugänglich ist.

Der Innenraum des Gargeräts weist in der Tiefe nach Vorne eine Durchgangsöffnung als Zugangsöffnung auf, durch welche hindurch der Innenraum des Gargeräts für den Benutzer zugänglich ist, um Gargeschirre in den Innenraum des Gargeräts als dessen Garraum einzuführen und dort anzuordnen sowie um Gargeschirre nach erfolgter Behandlung des Garguts aus dem Innenraum des Gargeräts zu entnehmen und von dort zu entfernen. Die Zugangsöffnung kann mittels eines Verschlusselements zum Beispiel in Form einer seitlich schwenkbaren Tür, einer nach unten schwenkbaren Klappe und dergleichen vom Benutzer geöffnet werden, um auf den Innenraum des Gargeräts zugreifen können, wie zuvor beschrieben, oder um den Innenraum des Gargeräts zu verschließen und den Garvorgang bzw. den Garprozess auszuführen. Ein derartiges Verschlusselement kann geschlossen ausgebildet sein oder ein Sichtfenster aufweisen, um dem Benutzer einen Einblick in den geschlossenen Innenraum des Gargeräts zu ermöglichen.

Derartige Gargeräte mit feststehendem Garraum werden üblicherweise als Einbaugeräte bzw. als Kücheneinbaugeräte ausgebildet, um platzsparend und auf einer für den Benutzer gut zugänglichen Höhe in der vertikalen Richtung in Küchenmöbeln wie zum Beispiel in Einbauschränken einer Küche feststehend mit ihrem Außengehäuse angeordnet zu werden und mit ihrem Verschlusselement, ggfs. zusätzlich mit ihrer Blende, siehe oben, nach Vorne zum Benutzer hin flächig bündig mit den Oberflächen der übrigen Gargeräte, Schubladen, Türen und dergleichen des Küchenmöbels abzuschließen, was den optischen Eindruck für den Benutzer verbessern kann.

Es sind auch andere Kücheneinbaugeräten wie zum Beispiel mit Wärmeschubladen, Vakuummierschubladen und dergleichen bekannt, welche wie zuvor beschrieben in der Küche montiert und insbesondere mit den zuvor beschriebenen Gargeräten als Einbaugeräte kombiniert horizontal übereinander und bzw. oder vertikal nebeneinander angeordnet werden. Wärmeschubladen dienen zum Beispiel dem Warmhalten des gegarten Garguts ohne weitere Garung und dem Vorwärmen von Geschirr. In Vakuummierschubladen können Lebensmitteln im Vakuum in einer Verpackung luftdicht verschlossen werden.

Derartige Schubladen als Küchengeräte sind grundsätzlich vergleichbar den zuvor beschriebenen Gargeräten mit feststehendem Garraum aufgebaut, wobei Schubladen deutlich flacher, d.h. kleiner in der vertikalen Richtung, ausgebildet sind und somit vom Benutzer nach Vorne zu sich hin aus dem Küchenmöbel herausgezogen werden müssen, um in der vertikalen Richtung von oben einen Zugriff auf ihren Innenraum zu ermöglichen. Zu diesem Zweck weist der bewegliche Teil der Schublade, welcher auch als Auszug bezeichnet werden kann, einen Auszugsboden auf, welcher der Aufnahme zum Beispiel des Gargeschirrs in der vertikalen Richtung von oben dient und zum Beispiel über in der Querrichtung seitlich angeordnete Schienen in der Tiefe beweglich gegenüber dem Innengehäuse der Schublade ausgebildet sein kann. Der Auszugsboden weist üblicherweise in der Tiefe nach Vorne hin eine vertikal ausgerichtete Blende auf, welche den Innenraum der Schublade bzw. dessen Zugangsöffnung im geschlossen Zustand verschließt.

Derartige Schubladen, auch Einbauschubladen genannt, weisen üblicherweise zumindest in Deutschland in der vertikalen Richtung eine Bauhöhe von ca. 15 cm auf. Schubladen werden üblicherweise in der vertikalen Richtung unterhalb eines Gargeräts mit feststehendem Garraum wie zum Beispiel unterhalb eines Backofens, unterhalb eines Dampfgarers und dergleichen oder in Kombination mit einer weiteren Schublade in der vertikalen Richtung übereinander angeordnet, können jedoch auch einzeln und eigenständig in einem Küchenmöbel eingebaut werden. Da die Einbauräume für Kücheneinbaugeräte in Küchenmöbel, welche auch als Nischen bezeichnet werden können, üblicherweise zumindest in Deutschland in der vertikalen Richtung eine Höhe von ca. 60 cm aufweisen, können insbesondere eine Schublade mit ca. 15 cm Bauhöhe und ein Gargerät mit feststehendem Garraum mit ca. 45 cm Bauhöhe modular miteinander kombiniert als Einbaugeräte verwendet werden.

Es ist auch bekannt, Gargeräte mit Dampfgarfunktion als Einbauschubladen auszubilden, welche als Dampfgarschubladen bezeichnet werden können. Üblicherweise nehmen derartige Dampfgarschubladen in ihrem Garraum, welcher auf dem Auszugsboden angeordnet ist, wenigstens ein Gargefäß mit Gargut auf. Das Gargefäß ist üblicherweise entnehmbar, üblicherweise nach oben aus der geöffneten Einbauschublade heraus. Entsprechend ist die Zugangsöffnung zum Garraum bei Dampfgarschubladen horizontal und üblicherweise rechteckig ausgebildet und kann üblicherweise mit einem schwenkbaren Deckel verschlossen und geöffnet werden. Der schwenkbare Deckel ist üblicherweise an der hinteren Kante der Dampfgarschublade, welcher der Blende abgewandt ist, nach oben hin schwenkbar angeordnet. US2590942 A offenbart ein Küchengerät mit einem Deckel, der mit einem Abtropfelement versehen ist.

In geschlossenen Einbauschubladen kann sich allgemein Kondenswasser an den Oberflächen des Innenraums inkl. der Innen- bzw. Unterseite des Verschlusselements in Form eines Deckels bilden. Dies kann umso stärker bzw. deutlicher auftreten, falls die Einbauschublade ein Einbauküchengerät aufweist bzw. darstellt, bei dessen Betrieb es zu einer Erzeugung von Wasserdampf kommen kann, da sich hierdurch die Menge an Feuchtigkeit in der Luft erhöht, welche an den Oberflächen kondensieren kann. Dies gilt insbesondere für ein Küchengerät mit Dampffunktion wie beispielsweise eine Dampfgarschublade.

In jedem Fall kann das Kondenswasser, welches sich an der Unterseite des Deckels der Einbauschublade bildet, an der Innen- bzw. Unterseite des Deckels zu einem Schwenkelement bzw. zu einem Scharnier bzw. Deckelscharnier hin herunterlaufen, wenn der Benutzer den Deckel hochklappt und somit der zuvor horizontal ausgerichtete Deckel teilweise bis vollständig in der vertikalen Richtung nach oben zeigt.

Das herunterlaufende Kondenswasser bzw. Kondensat kann somit seitlich am Deckel bzw. am Außengehäuse vorbei laufen und das Küchenmöbel erreichen, in dieses hineinfließen bzw. an dessen Möbelblende herunterfließen. Auch kann das Kondenswasser direkt von der Einbauschublade nach unten und insbesondere auf den Boden tropfen. Dies kann es erfordern, dass der Benutzer das ausgetretene Kondenswasser mit einem Lappen oder dergleichen aufsammeln und entfernen muss, um z.B. das Küchenmöbel vor Nässe zu schützen und bzw. oder die Rutschgefahr eines nassen Fußbodens zu vermeiden. In jedem Fall kann dies einen zusätzlichen Aufwand für den Benutzer darstellen. Auch kann das Kondenswasser in den Garraum gelangen und dort vom Benutzer zu entfernen sein.

Ist im Garraum eine Kondensatbehälter bzw. eine Kondensatschale als Auffangbehälter vorhanden, um das Kondensat von allen Oberflächen aufzunehmen, so dass die Kondensatmenge dessen Fassungsvermögen übersteigen, so dass das überschüssige Kondensat in den übrigen Innenraum bzw. Garraum gelangen und auch dort vom Benutzer zu entfernen sein kann. Auch kann das Kondensat an der Kondensatschale vorbei in den Innenraum gelangen, was ebenfalls ein händisches Entfernen dieses Kondensats durch den Benutzer erforderlich machen kann.

Dies kann insbesondere bei Küchengeräten auftreten, welche Dampf erzeugen bzw. verwenden wie beispielsweise Dampfgarer oder Dampfgar-Kombigeräte. Grundsätzlich kann Kondensat aber auch in anderen Küchengeräten auftreten. Dies gilt sowohl für freistehende als auch eingebaute Küchengeräte.

Der Erfindung stellt sich somit das Problem, ein Küchengerät, vorzugsweise ein Küchengerät mit Dampffunktion, besonders vorzugsweise eine Dampfgarschublade, der eingangs beschriebenen Art bereitzustellen, so dass an der Unterseite eines Deckels herunterlaufendes Kondenswasser besser als bisher bekannt aufgefangen werden kann. Dies soll insbesondere als Schublade bzw. als Einbauschublade erfolgen. In jedem Fall soll dies möglichst einfach, kostengünstig, bauraumsparend, langlebig und bzw. oder optisch unauffällig bzw. ansprechend erfolgen. Zumindest soll eine Alternative zu bekannten derartigen Küchengeräten geschaffen werden.

Erfindungsgemäß wird dieses Problem durch ein Küchengerät mit den Merkmalen des Patentanspruchs 1 gelöst. Vorteilhafte Ausgestaltungen und Weiterbildungen der Erfindung ergeben sich aus den nachfolgenden Unteransprüchen.

Somit betrifft die Erfindung ein Küchengerät, vorzugsweise ein Küchengerät mit Dampffunktion, besonders vorzugsweise eine Dampfgarschublade, mit einem Innenraum, vorzugsweise einem Garraum, welcher ausgebildet ist, wenigstens ein Gargeschirr und bzw. oder wenigstens ein Lebensmittel durch eine Zugangsöffnung von oben aufzunehmen, und mit einem Deckel, welcher ausgebildet ist, durch Schwenken mittels eines Schwenkelements, vorzugsweise eines Scharniers, die Zugangsöffnung des Innenraums von oben zu verschließen und freizugeben. Dies kann insbesondere als Einbauküchengerät und bzw. oder als Schublade bzw. als Einbauschublade realisiert werden.

Das Küchengerät ist gekennzeichnet durch wenigstens ein Abtropfelement, welches ausgebildet und angeordnet ist, an der Unterseite des hochgeschwenkten Deckels herunterlaufende Flüssigkeit, insbesondere Kondenswasser, aufzufangen und in den Innenraum, vorzugweise in einen Abfluss, zu leiten, wobei das Abtropfelement ausgebildet ist, vom hochgeschwenkten Deckel weg und zum hochgeschwenkten Deckel hin abschnittsweise über die Zugangsöffnung des Innenraums bewegt zu werden.

Somit kann erfindungsgemäß die Führung bzw. die Ableitung derartiger Flüssigkeiten durch das Abtropfelement verbessert werden, indem das Abtropfelement dem Auffangen und Leiten der Flüssigkeit dient. Das Abtropfelement kann hierzu insbesondere einstückig und aus Silikon ausgebildet sein.

Ferner kann die Bewegung des Abtropfelement es ermöglichen, dass Abtropfelement genau dann, wenn Flüssigkeiten aufzufangen sind und der Deckel hochgeklappt ist, d.h. die Zugangsöffnung ohnehin nach oben hin offen ist, soweit in Richtung der Zugangsöffnung zu bewegen bzw. zu verfahren, dass die Zugangsöffnung bzw. ein dortiger Abfluss für derartige Flüssigkeiten besser als ohne die Bewegung des Abtropfelements erreicht werden kann. Umgekehrt kann das Abtropfelement ansonsten wieder aus der Zugangsöffnung weg bewegt bzw. verfahren werden, um die Zugangsöffnung nicht zu blockieren.

Gemäß einem Aspekt der Erfindung ist das Abtropfelement ausgebildet, bei geschlossenem Deckel den Innenraum vollständig freizugeben und bei geöffnetem Deckel ausreichend weit entlang der Zugangsöffnung des Innenraums zu ragen, um aufgefangene Flüssigkeit in den Innenraum, vorzugweise in einen Abfluss, zu leiten. Dies kann eine konkrete Umsetzung darstellen, wie zuvor bereits erwähnt.

Gemäß einem weiteren Aspekt der Erfindung ist das Abtropfelement ausgebildet, mittels eines Antriebselements, vorzugsweise translatorisch, bewegt zu werden. Dies kann eine konkrete Möglichkeit der Umsetzung darstellen. Insbesondere kann dies die Bewegung vergleichsweise kurz bzw. geringhalten, um die zuvor beschriebenen Eigenschaften und Vorteile zu erreichen.

Gemäß einem weiteren Aspekt der Erfindung ist das Antriebselement an der Unterseite des Deckels angeordnet und ausgebildet, das Abtropfelement im Wesentlichen senkrecht gegenüber der Unterseite des Deckels zu bewegen. Dies kann eine konkrete Möglichkeit der Umsetzung darstellen.

Gemäß einem weiteren Aspekt der Erfindung ist das Abtropfelement mittels einer Schwenkelementanbindung derart mit dem Schwenkelement verbunden, so dass das Abtropfelement entsprechend der Schwenkbewegung des Deckels um das Schwenkelement geführt, vorzugsweise gewickelt, werden kann. Dies kann eine konkrete Möglichkeit der Umsetzung darstellen. Insbesondere kann dies eine Bewegung des Abtropfelements wie zuvor beschrieben ermöglichen, ohne eine zusätzlichen Antrieb zu verwenden. Auch kann die Bewegung des Abtropfelements synchron mit der Bewegung des Deckels auf diese Art und Weise mechanisch sichergestellt bzw. umgesetzt werden.

Gemäß einem weiteren Aspekt der Erfindung ist die Schwenkelementanbindung des Abtropfelements mit demjenigen Teil des Schwenkelements mitbeweglich verbunden, welcher mit dem Deckel mitbeweglich verbunden ist. Dies kann eine konkrete Möglichkeit der Umsetzung darstellen.

Gemäß einem weiteren Aspekt der Erfindung weist das Abtropfelement zumindest abschnittsweise, vorzugweise im Wesentlichen, randseitig gegenüber dem Innenraum wenigstens eine Kondensatführung, vorzugsweise wenigstens eine seitliche Kante, auf, welche ausgebildet ist, aufgefangene Flüssigkeit, vorzugsweise mittig, in den Innenraum, vorzugweise in einen Abfluss, zu leiten. Dies kann eine Möglichkeit darstellen, für Führung der Flüssigkeit weiter zu verbessern.

Gemäß einem weiteren Aspekt der Erfindung weist das Abtropfelement zumindest abschnittsweise, vorzugsweise vollflächig, eine Führungsfläche, vorzugsweise als Gefälle, auf, welche ausgebildet ist, aufgefangene Flüssigkeit, vorzugsweise mittig, in den Innenraum, vorzugweise in einen Abfluss, zu leiten. Dies kann eine Möglichkeit darstellen, für Führung der Flüssigkeit weiter zu verbessern. Insbesondere kann das Gefälle, insbesondere zum Abfluss bzw. zum Auslass hin, die Führung der Flüssigkeit dorthin verbessern.

Gemäß einem weiteren Aspekt der Erfindung weist die Führungsfläche des Abtropfelements zumindest abschnittsweise, vorzugsweise vollflächig, wenigstens eine Kondensatführung, vorzugsweise wenigstens ein Leitelement als Vertiefung und bzw. oder als Erhebung, auf, welche ausgebildet ist, aufgefangene Flüssigkeit, vorzugsweise mittig, in den Innenraum, vorzugweise in einen Abfluss, zu leiten. Dies kann eine Möglichkeit darstellen, für Führung der Flüssigkeit weiter zu verbessern.

Gemäß einem weiteren Aspekt der Erfindung weist das Abtropfelement, vorzugsweise eine Führungsfläche des Abtropfelements, vorzugsweise mittig, wenigstens einen, vorzugsweise dreieckigen oder geschwungenen, Auslass auf, welcher ausgebildet ist, aufgefangene Flüssigkeit in den Innenraum, vorzugweise in einen Abfluss, zu leiten. Dies kann eine Möglichkeit darstellen, für Führung der Flüssigkeit weiter zu verbessern. Aufgrund der dreieckigen oder geschwungenen Form kann in der Mitte der größte Materialanteil vorhanden sein, so dass das Eigengewicht die Abtropflippe bzw. Auffanglippe, insbesondere am Auslass, nach unten neigen kann, was die Führung der Flüssigkeit weiter verbessern kann.

Gemäß einem weiteren Aspekt der Erfindung weist das Schwenkelement zumindest abschnittsweise, vorzugweise im Wesentlichen, randseitig seitlich wenigstens eine Kondensatführung, vorzugsweise wenigstens eine seitliche Kante, auf, welche ausgebildet ist, aufgefangene Flüssigkeit zum Abtropfelement hin zu leiten. Dies kann eine Möglichkeit darstellen, für Führung der Flüssigkeit weiter zu verbessern.

Gemäß einem weiteren Aspekt der Erfindung weist das Schwenkelement zumindest abschnittsweise, vorzugsweise vollflächig, wenigstens eine Kondensatführung, vorzugsweise wenigstens ein Leitelement als Vertiefung und bzw. oder als Erhebung, auf, welche ausgebildet ist, aufgefangene Flüssigkeit, vorzugsweise mittig, zum Abtropfelement hin zu leiten. Dies kann eine Möglichkeit darstellen, für Führung der Flüssigkeit weiter zu verbessern.

Gemäß einem weiteren Aspekt der Erfindung ist das Küchengerät als Schublade ausgebildet. Dies kann die Umsetzung und Nutzung der zuvor beschriebenen Eigenschaften und Vorteile insbesondere bei derartigen Küchengeräten ermöglich.

Mit anderen Worten ist es bekannt, den Innenraum eines Einbauküchengeräts und insbesondere den Garraum eines Küchengeräts mit Dampffunktion wie beispielsweise einer Dampfgarschublade mit einem Deckel zu verschließen. Beispielweise während eines Dampfgarprozesses kann sich kondensierendes Wasser an der Unterseite des Deckels bilden. Das kondensierte Wasser bzw. das Kondensat fließt bei dem Öffnen des Deckels nach unten und ggfs. über ein Scharnier des Deckels in den Garraum ab.

Dabei kann bisher das kondensierte Wasser nicht gezielt in eine ggfs. im Garraum platzierte Kondensatschale geführt und durch diese aufgefangen werden. Dies kann dazu führen, dass die Kondensatmenge im Garraum deutlich, beispielsweise um das 2,5fach, größer als die zugelassene Restwassermenge im Garraum von beispielsweise 50mL sein kann. Dies kann dazu führen, dass der Benutzer die Kondensatschale entnehmen und ausleeren und zusätzlich mehrfach den Garraum beispielsweise mit einem Schwammtuch auswischen muss, um das Kondenswasser bzw. das Restwasser aus dem Garraum zu entfernen.

Zur Abfuhr des Kondensats kann ein Abfluss vorgesehen werden, was aufgrund der vergleichsweise geringen Bauhöhe von üblicherweise 14 cm schwierig zu realisieren sein kann.

Eine Möglichkeit zum Abpumpen vorzusehen kann einen nicht-unerheblichen Aufwand darstellen und ebenfalls Bauraum erfordern, welcher ohnehin knapp sein kann.

Es kann auch eine Abtropflippe bzw. eine Auffanglippe auf der Unterseite am Deckel über dem Scharnier angebracht werden, um das Kondenswasser gezielt zur Kondensatschale zu leiten. Diese kann jedoch zu kurz ausgebildet sein und nicht bis über die Kondensatschale reichen. Die Abtropflippe bzw. Auffanglippe kann zu hoch angebracht sein, so dass ablaufendes Wasser spritzen kann. Die Abtropflippe bzw. Auffanglippe kann auch zu lang ausgebildet sein, um das Kondenswasser zwar in die Garschale zu führen, aber im geschlossenen Zustand zwischen dem Deckel und dem Garraum bzw. einem Garbehälter zu liegen, was die Dampfverteilung bzw. den Dampfgarprozess und bzw. oder das optische Empfinden (Design) beeinträchtigen kann.

Erfindungsgemäß kann daher eine Abtropflippe bzw. eine Auffanglippe insbesondere auf der Unterseite am Deckel unter dem Scharnier angebracht sein, wobei die Abtropflippe bzw. Auffanglippe ein- und ausgefahren werden kann. Damit kann das Kondenswasser vom Deckel gezielt zur Kondensatschale geleitet werden (ausgefahrener Zustand) und zusätzlich wird der Dampfgarprozess nicht gestört (eingefahrener Zustand), da sich die Abtropflippe/Auffanglippe dann nicht zwischen dem Deckel und den Garbehältern befindet. Zudem kann durch den "Verschwindeeffekt" ein optisch ansprechendes Design umgesetzt werden.

Die Abtropflippe/Auffanglippe kann axial, translatorisch mechanisch oder durch Aktoren ein- und ausgefahren werden.

Ist in jedem Fall der Deckel geschlossen, so kann die Abtropflippe/Auffanglippe eingefahren sein und nicht störend auf die Dampfverteilung oder das optische Empfinden wirken. Wird der Deckel geöffnet, so kann die Abtropflippe/Auffanglippe ausgefahren werden. Ist der Deckel geöffnet, kann die Abtropflippe/Auffanglippe mit dem Ablauf bis über die Kondensatschale reichen. Das Kondenswasser kann gezielt in die Kondensatschale geführt werden. Wird der Deckel geschlossen, so kann die Abtropflippe/Auffanglippe eingefahren werden.

Die Umsetzung kann mittels eines mechanischen Handantriebs des Deckelschaniers erfolgen. Hierzu ist die Abtropflippe/Auffanglippe an der Unterseite des Deckels vor dem Deckelscharnier befestigt. Die Abtropflippe/Auffanglippe ist vorzugsweise aus einem dünnen und flexiblen Material ausgebildet.

Wird der Deckel geschlossen, kann die Abtropflippe/Auffanglippe mit der Drehbewegung von vorzugsweise 90° um das Deckelscharnier aufgewickelt und axial (translatorisch) eingefahren bzw. eingezogen werden. Bei einem geschlossenen Deckel kann die Abtropflippe bzw. Auffanglippe um die Länge eines Viertels des Scharnierumfangs weniger in den Garraum hineinragen als bei geöffnetem Deckel und der Dampf kann sich besser verteilen. Bei einer Deckelöffnung kann über die Drehbewegung von vorzugsweise 90° die Abtropflippe/Auffanglippe um ein Viertel des Scharnierumfangs nach vorne in den Garraum ausgefahren werden und gezielt das Kondenswasser in die Kondensatschale leiten.

Die Umsetzung kann mittels eines Aktors erfolgen. Ebenfalls kann die Abtropflippe bzw. Auffanglippe durch verschiedene Aktoren ein- oder ausgefahren werden. Hierbei ist zu beachten, dass die Abtropflippe/Auffanglippe nicht zwangsweise aufgewickelt werden muss, sondern auch gerade eingezogen und ausgefahren werden kann. Beispielsweise kann ein elektrischer oder magnetischer Antrieb verwendet werden. Es kann ein Elektromotor verwendet werden, wobei die Krafteinleitung direkt oder mit/ohne Getriebe (Zahlstange, Zahnrad) erfolgen kann. Es kann eine Spule mit Metallkern verwendet werden, wobei die Krafteinleitung über die Magnetkraft zu einem magnetischen Gegenpol erfolgen kann. Es kann ein Wachsschmelz-Element verwendet werden, wobei die Krafteinleitung durch die Ausdehnung von Wachs bei Erwärmung erfolgen kann. Es kann ein mechanischer Antrieb verwendet werden, wobei die Krafteinleitung/-übertrag durch Flüssigkeit (hydraulisch) oder durch Luftdruck (pneumatisch) erfolgen kann.

Vorteilhaft ist im geöffneten Zustand, dass die ausgefahrene Abtropflippe/Auffanglippe weiter als bisher üblich in den Garraum hineinragt, so dass Kondenswasser gezielt in die Kondensatschale geführt werden kann.

Vorzugsweise kann die ausgefahrene Abtropflippe/Auffanglippe am tiefsten Punkt angebracht sein, so dass abfließendes Wasser komplett erfasst werden und abtropfendes Wasser nicht spritzen kann.

In jedem Fall kann das Kondenswasser komplett in der Kondensatschale aufgefangen werden, so dass der Benutzer diese nur einmal entnehmen und leeren muss. Somit verbleibt im Garraum weniger Restwasser, das durch den Benutzer ausgewischt werden muss. Hierbei kann die Menge von ca. 50mL eingehalten werden.

Im geschlossenen Zustand kann die eingefahrene Abtropflippe/Auffanglippe nicht störend zwischen dem Deckel und den Garbehältern liegen. Die Dampfverteilung und damit der Dampfgarprozess werden dann nicht beeinträchtigt. Die eingefahrene Abtropflippe/Auffanglippe kann kürzer sein und damit das Produkt optisch attraktiver wirken.

Mehrere Ausführungsbeispiele der Erfindung sind in den Zeichnungen rein schematisch dargestellt und werden nachfolgend näher beschrieben. Es zeigt
- Figur 1: eine perspektivische Darstellung eines Küchenmöbels mit einem erfindungsgemäßen Küchengerät gemäß eines ersten Ausführungsbeispiels als Dampfgarschublade im eingeschobenen Zustand;
- Figur 2: die Darstellung der Figur 1 im ausgezogenen Zustand des Küchengeräts;
- Figur 3: eine perspektivische Darstellung des erfindungsgemäßen Küchengeräts gemäß des ersten Ausführungsbeispiels mit geöffnetem Deckel von schräg vorne oben;
- Figur 4: eine perspektivische Darstellung des erfindungsgemäßen Küchengeräts gemäß eines zweiten Ausführungsbeispiels mit geöffnetem Deckel von schräg vorne oben;
- Figur 5: eine perspektivische Darstellung des erfindungsgemäßen Küchengeräts gemäß eines dritten Ausführungsbeispiels mit geöffnetem Deckel von schräg vorne oben;
- Figur 6: eine perspektivische Darstellung des erfindungsgemäßen Küchengeräts gemäß eines vierten Ausführungsbeispiels mit geöffnetem Deckel von schräg vorne oben;
- Figur 7: ein Abtropfelement des erfindungsgemäßen Küchengeräts gemäß des vierten Ausführungsbeispiels direkt von oben;
- Figur 8: die Darstellung der Figur 7 mit den Fließrichtungen eines Kondensats;
- Figur 9: ein Abtropfelement des erfindungsgemäßen Küchengeräts gemäß eines fünften Ausführungsbeispiels direkt von oben;
- Figur 10: die Darstellung der Figur 9 mit den Fließrichtungen eines Kondensats;
- Figur 11: eine perspektivische Detaildarstellung eines Abschnitts einer Führungsfläche bzw. eines Gefälle des Abtropfelements des erfindungsgemäßen Küchengeräts gemäß des vierten Ausführungsbeispiels der Figur 7;
- Figur 12: eine perspektivische Detaildarstellung eines Abschnitts einer Führungsfläche bzw. eines Gefälle des Abtropfelements eines erfindungsgemäßen Küchengeräts gemäß eines sechsten Ausführungsbeispiels;
- Figur 13: eine perspektivische Detaildarstellung eines Abschnitts eines Schwenkelements des erfindungsgemäßen Küchengeräts gemäß des vierten Ausführungsbeispiels der Figur 7; und
- Figur 14: eine perspektivische Detaildarstellung eines Abschnitts eines Schwenkelements eines erfindungsgemäßen Küchengeräts gemäß des siebten Ausführungsbeispiels.

Die o.g. Figuren werden in kartesischen Koordinaten betrachtet. Es erstreckt sich eine Längsrichtung X, welche auch als Tiefe X oder als Länge X bezeichnet werden kann. Senkrecht zur Längsrichtung X erstreckt sich eine Querrichtung Y, welche auch als Breite Y bezeichnet werden kann. Senkrecht sowohl zur Längsrichtung X als auch zur Querrichtung Y erstreckt sich eine vertikale Richtung Z, welche auch als Höhe Z bezeichnet werden kann und der Richtung der Schwerkraft entspricht. Die Längsrichtung X und die Querrichtung Y bilden gemeinsam die Horizontale X, Y, welche auch als horizontale Ebene X, Y bezeichnet werden kann.

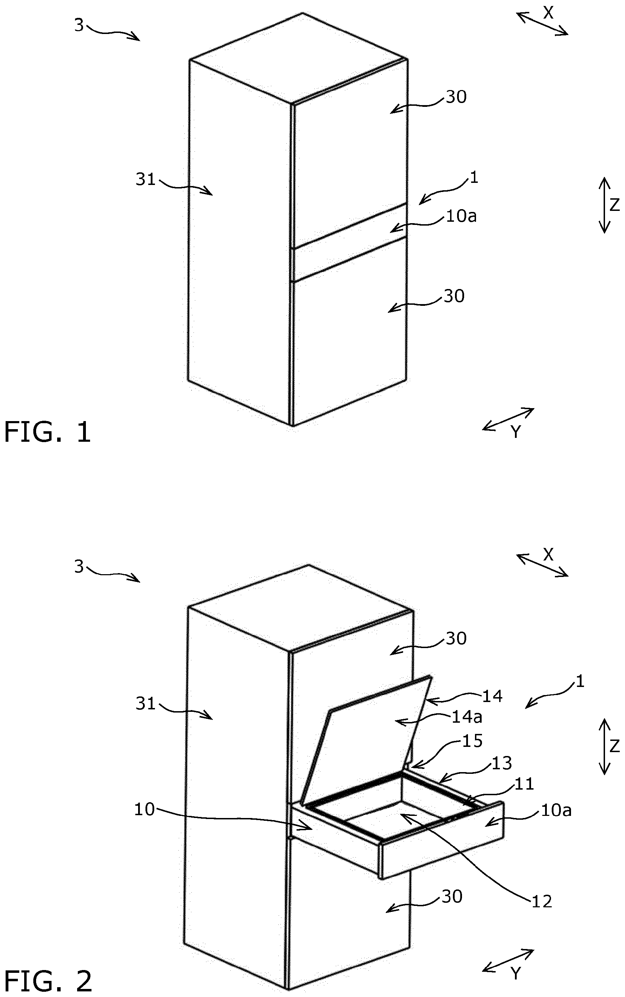

Figur 1 zeigt eine perspektivische Darstellung eines Küchenmöbels 3 mit einem erfindungsgemäßen Küchengerät 1 gemäß eines ersten Ausführungsbeispiels im eingeschobenen Zustand. Figur 2 zeigt die Darstellung der Figur 1 im ausgezogenen Zustand des Küchengeräts 1.

Das Küchenmöbel 3, welches auch als Küchenzeile 3 bezeichnet, werden kann, weist ein Möbelfront 30 bzw. mehrere Möbelblenden 30 auf, mit welcher bzw. mit welchen das Küchenmöbel 1 einem Benutzer zugewandt in der Längsrichtung X nach vorne hin abschließt. Die Möbelfront 30 wird von mehreren Türen, Klappen und dergleichen (nicht bezeichnet), ggfs. auch Schubladen (nicht dargestellt) gebildet, welche schwenkbar, klappbar bzw. ziehbar an einem Rahmen 31, Gestell 31 bzw. Korpus 31 des Küchenmöbels 3 angeordnet sind.

Entlang der vertikalen Richtung Z etwa mittig ist zwischen zwei Möbelfronten 30 ein erfindungsgemäße Küchengerät 1 in Form einer Dampfgarschublade 1 als Küchengerät 1 mit Dampffunktion angeordnet. Die Dampfgarschublade 1 weist ein Außengehäuse 10 auf, welches auch als äußeres Gehäuse 10 bezeichnet werden kann und die Dampfgarschublade 1 im Wesentlichen nach außen abschließt bzw. umschließt. Das Außengehäuse 10 schließt entlang der Längsrichtung X nach Vorne, d.h. zum Benutzer hin, mit einer Blende 10a, welche im eingeschobenen Zustand der Dampfgarschublade 1 flächig bündig mit den Möbelfronten 30 des Küchenmöbels 3 abschließt, siehe Figur 1. Seitlich in der Querrichtung Y ist ein Paar von Teleskopschienen (nicht dargestellt) an dem Außengehäuse 10 angeordnet, so dass die Dampfgarschublade 1 gegenüber dem Rahmen 30 des Küchenmöbels 3 in der Längsrichtung X ausgezogen und eingeschoben werden kann.

Innerhalb des Außengehäuses 10 ist ein Innengehäuse 11 angeordnet, welches auch als inneres Gehäuse 11 bezeichnet werden kann. Das Innengehäuse 11 schließt in der Längsrichtung X nach hinten sowie nach vorne bis zur Blende 10a, in der vertikalen Richtung Z nach unten sowie in der Querrichtung Y zu beiden Seiten mit dem Außengehäuse 10 ab, sodass zwischen dem Außengehäuse 10 und im Innengehäuse 11 ein Zwischenraum (nicht dargestellt) gebildet wird, welcher auch als Gehäuseraum bezeichnet werden kann. Dieser Zwischenraum stellt das Innere der Dampfgarschublade 1 dar.

Von dem Innengehäuse 11 wird ferner im Wesentlichen ein Innenraum 12 umschlossen, in welchem ein Garprozess bzw. ein Dampfgarprozess durchgeführt werden kann. Hierzu ist im Gehäuseraum bzw. im Zwischenraum der Dampfgarschublade 1 ein Dampferzeuger (nicht dargestellt) angeordnet, welcher Wasser verdampfen und den Wasserdampf in den Innenraum 12 fördern kann. Entsprechend kann der Innenraum 12 auch als Garraum 12 bezeichnet werden.

Der Innenraum 12 ist in der vertikalen Richtung Z für den Benutzer von oben durch eine Zugangsöffnung 13 hindurch zugänglich. Die Zugangsöffnung 13 kann mittels eines Verschlusselements 14 in Form eines Deckels 13 geschlossen und geöffnet werden. Der Deckel 14 ist hierzu mittels wenigstens eines Schwenkelements 14a in Form eines Scharniers 14a in der vertikalen Richtung Z nach oben hin schwenkbar mit dem Außengehäuse 10 der Dampfgarschublade 1 verbunden, so dass der Deckel 14 vom Benutzer von sich weg bzw. zur darüber befindlichen Möbelblende 30 hin hochgeschwenkt werden kann, um im ausgezogenen Zustand der Dampfgarschublade 1 auf den Garraum 12 zugreifen zu können, siehe Figur 2. Wird der Deckel 14 in die Horizontalen X, Y heruntergeschwenkt, wird der Garraum 12 verschlossen und die Dampfgarschublade 1 kann in das Küchenmöbel 3 eingeschoben werden, siehe Figur 1.

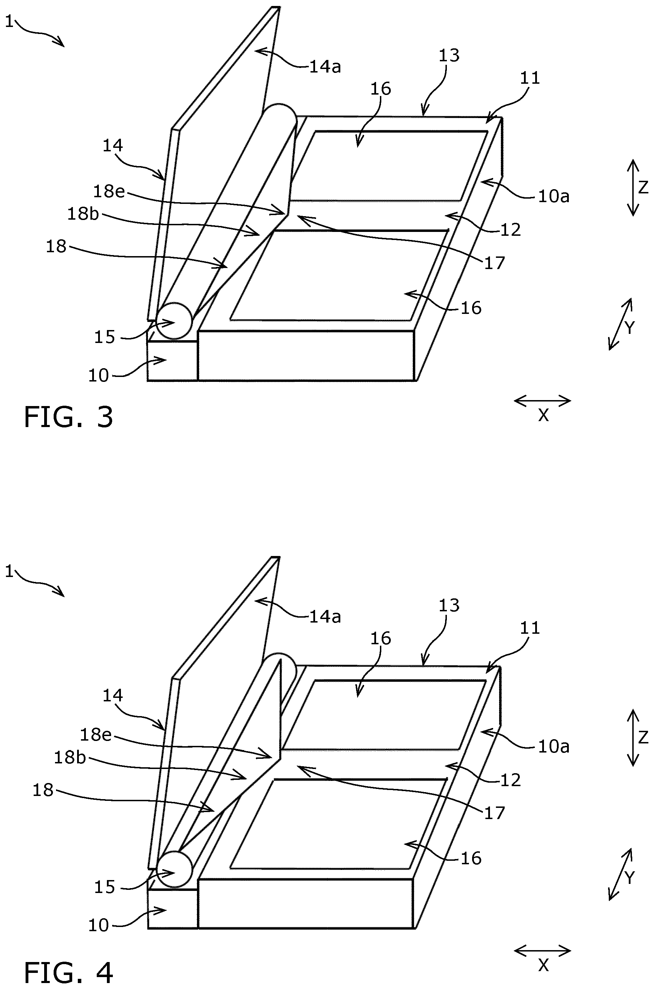

Figur 3 zeigt eine perspektivische Darstellung des erfindungsgemäßen Küchengeräts 1 gemäß des ersten Ausführungsbeispiels mit geöffnetem Deckel 14 von schräg vorne oben. Erfindungsgemäß ist ein Abtropfelement 18 vorgesehen, welches auch als Abtropflippe 18 oder als Auffanglippe 18 bezeichnet werden kann. Das Abtropfelement 18 ist als flaches Dreieck ausgebildet und erstreckt sich im Wesentlichen in der Querrichtung Y und dort über die gesamte Breite der Zugangsöffnung 13. In der Querrichtung Y mittig ist eine Spitze als Auslass 18e ausgebildet. Die flächige Erstreckung des Abtropfelements 18 in Form einer Führungsfläche 18b bzw. eines Gefälles 18b zeigt zu dem Auslass 13 hin.

Gemäß des ersten Ausführungsbeispiels ist das Abtropfelement 18 mittels eines Antriebselements (nicht dargestellt) translatorisch beweglich. Dabei ist das Antriebselement unten am Schwenkelement 15 angeordnet und ausgebildet ist, das Abtropfelement 18 etwa senkrecht gegenüber der Unterseite 14a des Deckels 14 vom hochgeschwenkten Deckel 14 weg und zum hochgeschwenkten Deckel 14 hin abschnittsweise über die Zugangsöffnung 13 des Innenraums 12 zu bewegen. Ist der Deckel 14 hochgeklappt, so zeigt das Abtropfelement 18 rechtwinkelig von der Unterseite 14a des Deckels 14 weg und kann somit horizontal flächig über die Zugangsöffnung 13 bewegt bzw. verfahren werden. Hierdurch kann der Auslass 18e des Abtropfelements 18 über einen Abfluss 17 gebracht werden, welcher in der Querrichtung Y zwischen zwei entnehmbaren Gargeschirren 16 bzw. Garbehältern 16 angeordnet ist und zu einem Kondensatbehälter, zu einer Kondensatschale bzw. zu einem Auffangbehälter (nicht dargestellt) hinführt, um dort Kondantsat aufzunehmen. Der Kondensatbehälter ist entnehmbar unterhalb der Gargeschirre 16 angeordnet.

Ist der Deckel 14 hochgeklappt, so kann das Abtropfelement 18 an der Unterseite 14a des hochgeschwenkten Deckels 14 herunterlaufende Flüssigkeit, insbesondere Kondenswasser, auffangen und in den Innenraum 12 bzw. zu dessen Abfluss 17 hin leiten. Aufgrund der beim Hochschwenken des Deckels 14 erfolgen Bewegung des Abtropfelements 18 ragt dessen Auslass 18e ausreichend weit in die Zugangsöffnung 13 bzw. über den Abfluss 17 des Kondensatbehälters, dass der Abfluss 17 des Kondensatbehälters vom abfließenden Kondensat sicher erreicht werden kann.

Aufgrund der Bewegung des Abtropfelements 18 gibt das Abtropfelement 18 bei geschlossenem Deckel 14 den Innenraum 12 wieder vollständig frei, so dass eine Dampfgarfunktion bzw. dessen Dampfverteilung nicht gestört werden.

Figur 4 zeigt eine perspektivische Darstellung des erfindungsgemäßen Küchengeräts 1 gemäß eines zweiten Ausführungsbeispiels mit geöffnetem Deckel 14 von schräg vorne oben. In diesem Fall ist das Antriebselement oben am Schwenkelement 15 angeordnet und ausgebildet ist, das Abtropfelement 18 etwa senkrecht gegenüber der Unterseite 14a des Deckels 14 vom hochgeschwenkten Deckel 14 weg und zum hochgeschwenkten Deckel 14 hin abschnittsweise über die Zugangsöffnung 13 des Innenraums 12 zu bewegen.

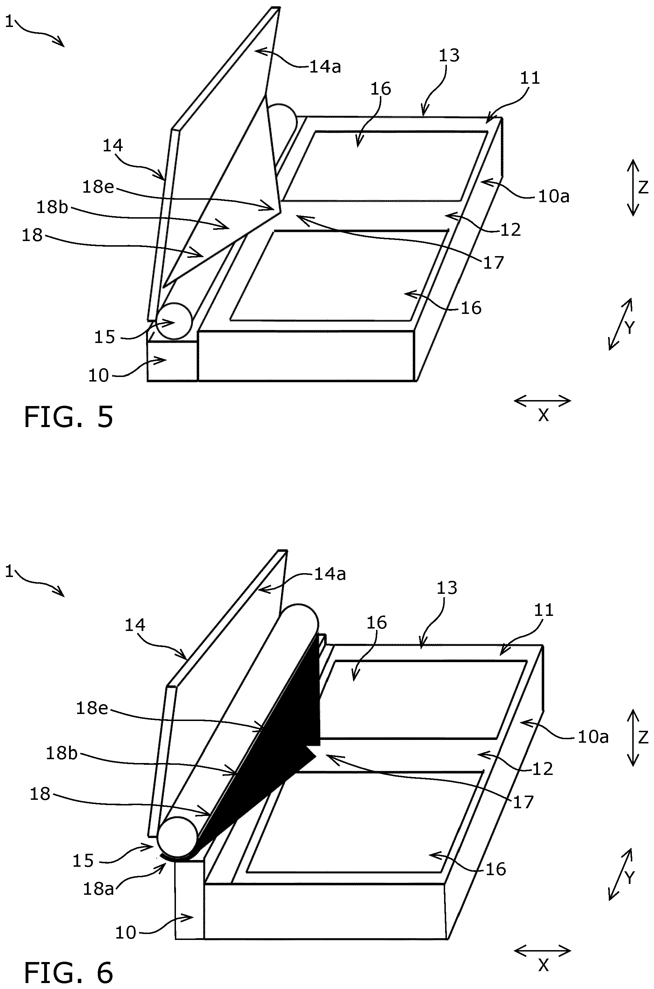

Figur 5 zeigt eine perspektivische Darstellung des erfindungsgemäßen Küchengeräts 1 gemäß eines dritten Ausführungsbeispiels mit geöffnetem Deckel 14 von schräg vorne oben. In diesem Fall ist das Antriebselement an der Unterseite 14a des Deckels 14 angeordnet und ausgebildet ist, das Abtropfelement 18 etwa senkrecht gegenüber der Unterseite 14a des Deckels 14 vom hochgeschwenkten Deckel 14 weg und zum hochgeschwenkten Deckel 14 hin abschnittsweise über die Zugangsöffnung 13 des Innenraums 12 zu bewegen.

Figur 6 zeigt eine perspektivische Darstellung des erfindungsgemäßen Küchengeräts 1 gemäß eines vierten Ausführungsbeispiels mit geöffnetem Deckel 14 von schräg vorne oben. In diesem Fall ist das Abtropfelement 18 mittels einer Schwenkelementanbindung 18a derart mit dem Schwenkelement 15 verbunden, so dass das Abtropfelement 18 entsprechend der Schwenkbewegung des Deckels 14 um das Schwenkelement 15 gewickelt wird. Hierzu ist die Schwenkelementanbindung 18a des Abtropfelements 18 mit demjenigen Teil des Schwenkelements 15 mitbeweglich verbunden, welcher mit dem Deckel 14 mitbeweglich verbunden ist. Dies kann die Umsetzung der zuvor beschriebene Beweglichkeit ohne zusätzlichen Antrieb sowie mechanisch synchronisiert mit der Bewegung des Deckels 14 ermöglichen.

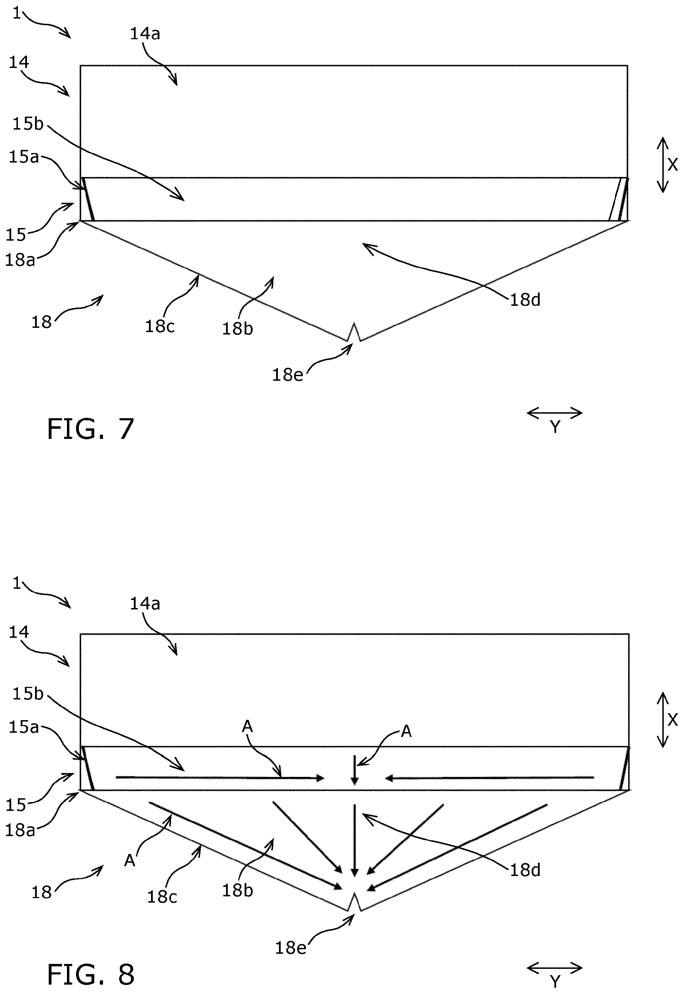

Figur 7 zeigt ein Abtropfelement 18 des erfindungsgemäßen Küchengeräts 1 gemäß des vierten Ausführungsbeispiels direkt von oben. Figur 8 zeigt die Darstellung der Figur 7 mit den Fließrichtungen A eines Kondensats. In diesem Fall ist die Führungsfläche 18b des Abtropfelements 18 dreieckig ausgebildet, wie zuvor bereits erwähnt.

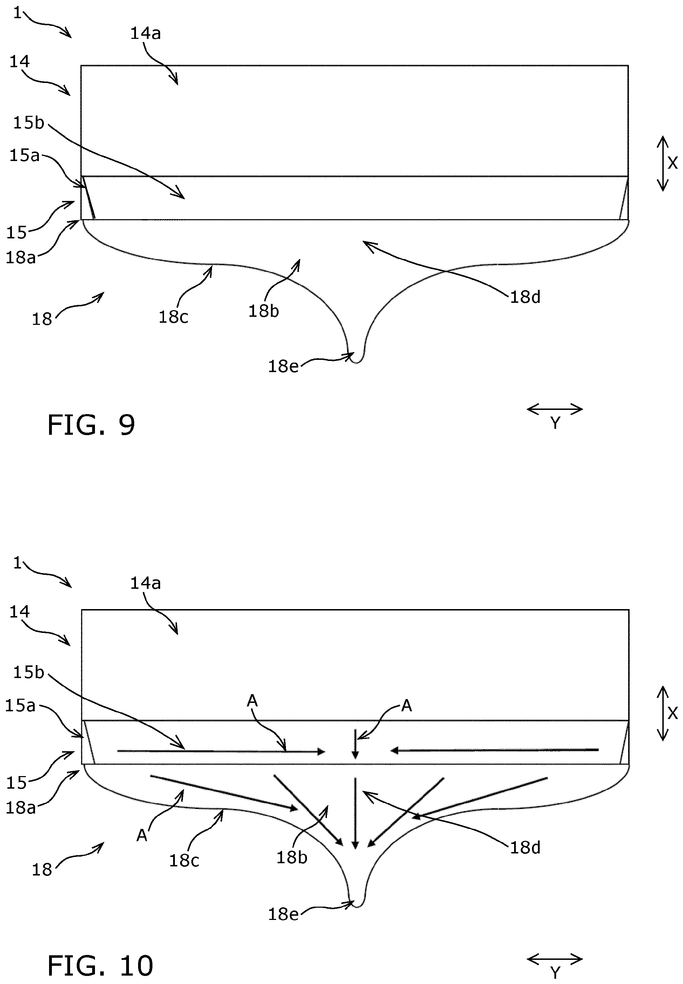

Figur 9 zeigt ein Abtropfelement 18 des erfindungsgemäßen Küchengeräts 1 gemäß eines fünften Ausführungsbeispiels direkt von oben. Figur 10 zeigt die Darstellung der Figur 9 mit den Fließrichtungen A eines Kondensats. In diesem Fall ist die Führungsfläche 18b des Abtropfelements 18 geschwungen ausgebildet.

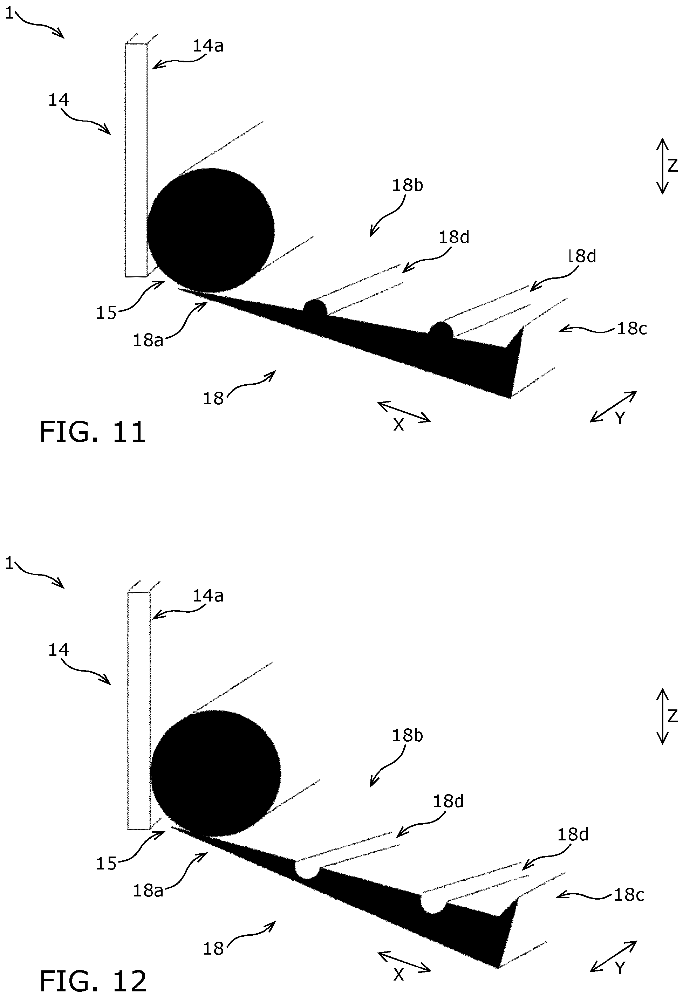

In jedem Fall weist das Abtropfelement 18 zur Verbesserung der Führung des Kondensats von der Unterseite 14a des hochgeklappten Deckels 14 zum Auslass 18e des Abtropfelements 18 hin randseitig gegenüber dem Innenraum 12 beidseitig des Auslasses 18e entlang der Querrichtung Y jeweils eine durchgängige Kondensatführung 18c in Form einer seitlichen Kante 18c auf. Ferner weist das Abtropfelement 18 zu diesem Zweck vollflächig die bereits erwähnte Führungsfläche 18b als Gefälle 18b, auf. Auch weist die Führungsfläche 18b des Abtropfelements 18 zu diesem Zweck vollflächig mehrere Kondensatführungen 18d in Form von Leitelementen 18d als Vertiefungen, siehe Figur 11, und bzw. oder als Erhebungen, siehe Figur 12, auf.

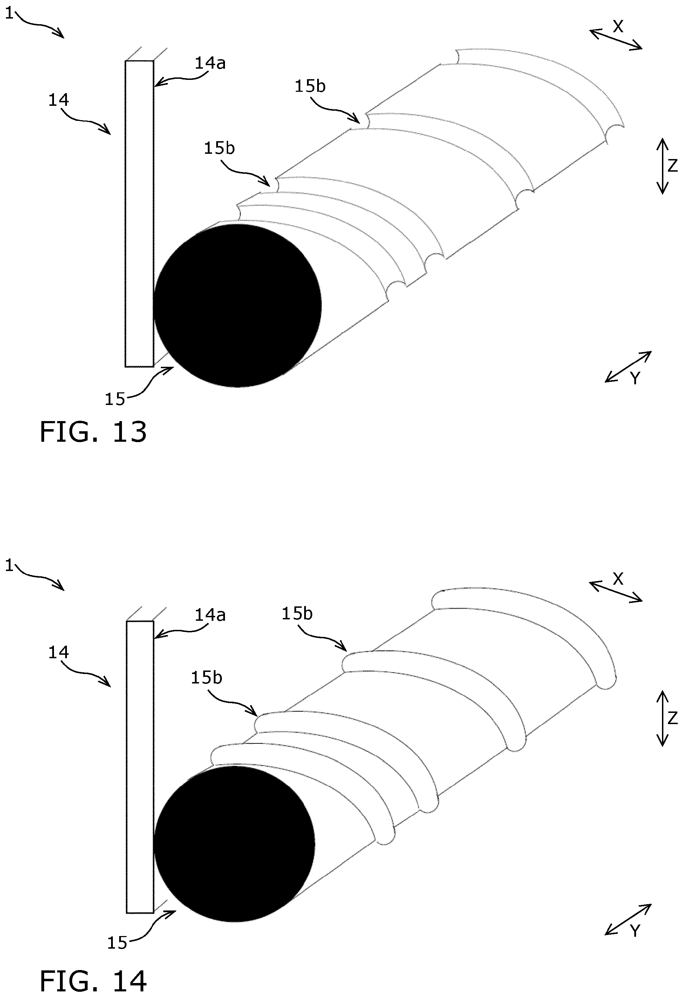

Aus diesem Grund sind auch am Schwenkelement 15 oben drauf zum einen in der Querrichtung Y randseitig Kondensatführungen 15a bzw. seitliche Kanten 15a vorgesehen, um das Kondensat auf dem Schwenkelement 15 zu halten. Zum anderen sind entlang des Schwenkelements 15 Kondensatführungen 15b bzw. Leitelemente 15b vorgesehen, um das Kondensat weiter zur Mitte hin zu führen. Die Leitelemente 15b des Schwenkelements 15 können als Vertiefungen, siehe Figur 13, und bzw. oder als Erhebungen 15b, siehe Figur 14, ausgebildet sein.

### Bezugszeichenliste (Bestandteil der Beschreibung)

- A: Fließrichtung des Kondensats
- X: Längsrichtung; Tiefe; Länge
- Y: Querrichtung; Breite
- Z: vertikale Richtung; Höhe
- X, Y: Horizontale; horizontale Ebene

- 1: Küchengerät; Küchengerät mit Dampffunktion; Dampfgarschublade
- 10: Außengehäuse; äußeres Gehäuse
- 10a: Blende
- 11: Innengehäuse; inneres Gehäuse
- 12: Innenraum; Garraum
- 13: Zugangsöffnung
- 14: Verschlusselement; Deckel
- 14a: Unterseite bzw. Innenseite des Verschlusselements 14
- 15: Schwenkelement; Scharnier; Deckelscharnier
- 15a: Kondensatführungen bzw. seitliche Kanten des Schwenkelements 15
- 15b: Kondensatführungen bzw. Leitelemente des Schwenkelements 15 als
- 16: Gargeschirre; Garbehälter
- 17: Abfluss zu Kondensatbehälter, Kondensatschale bzw. Auffangbehälter
- 18: Abtropfelement; Abtropflippe; Auffanglippe
- 18a: Schwenkelementanbindung des Abtropfelements 18
- 18b: Führungsfläche bzw. Gefälle des Abtropfelements 18
- 18c: Kondensatführungen bzw. seitliche Kanten des Abtropfelements 18
- 18d: Kondensatführungen bzw. Leitelemente des Abtropfelements 18
- 18e: Auslass des Abtropfelements 18

- 3: Küchenmöbel; Küchenzeile
- 30: Möbelfront; Möbelblende
- 31: Rahmen; Gestell; Korpus

## Patentansprüche

1. Küchengerät (1), vorzugsweise Küchengerät (1) mit Dampffunktion, besonders vorzugsweise Dampfgarschublade (1),
mit einem Innenraum (12), vorzugsweise einem Garraum (12), welcher ausgebildet ist, wenigstens ein Gargeschirr und/oder wenigstens ein Lebensmittel durch eine Zugangsöffnung (13) von oben aufzunehmen, und
mit einem Deckel (14), welcher ausgebildet ist, durch Schwenken mittels eines Schwenkelements (15), vorzugsweise eines Scharniers (15), die Zugangsöffnung (13) des Innenraums (12) von oben zu verschließen und freizugeben,
**gekennzeichnet durch**
wenigstens ein Abtropfelement (18), welches ausgebildet und angeordnet ist, an der Unterseite (14a) des hochgeschwenkten Deckels (14) herunterlaufende Flüssigkeit, insbesondere Kondenswasser, aufzufangen und in den Innenraum (12), vorzugweise in einen Abfluss (17), zu leiten,
wobei das Abtropfelement (18) ausgebildet ist, vom hochgeschwenkten Deckel (14) weg und zum hochgeschwenkten Deckel (14) hin abschnittsweise über die Zugangsöffnung (13) des Innenraums (12) bewegt zu werden.

2. Küchengerät (1) nach Anspruch 1,
wobei das Abtropfelement (18) ausgebildet ist,
bei geschlossenem Deckel (14) den Innenraum (12) vollständig freizugeben und
bei geöffnetem Deckel (14) ausreichend weit entlang der Zugangsöffnung (13) des Innenraums (12) zu ragen, um aufgefangene Flüssigkeit in den Innenraum (12), vorzugweise in einen Abfluss (17), zu leiten.

3. Küchengerät (1) nach Anspruch 1 oder 2,
wobei das Abtropfelement (18) ausgebildet ist, mittels eines Antriebselements, vorzugsweise translatorisch, bewegt zu werden.

4. Küchengerät (1) nach Anspruch 3,
wobei das Antriebselement an der Unterseite (14a) des Deckels (14) angeordnet und ausgebildet ist, das Abtropfelement (18) im Wesentlichen senkrecht gegenüber der Unterseite (14a) des Deckels (14) zu bewegen.

5. Küchengerät (1) nach Anspruch 1 oder 2,
wobei das Abtropfelement (18) mittels einer Schwenkelementanbindung (18a) derart mit dem Schwenkelement (15) verbunden ist, so dass das Abtropfelement (18) entsprechend der Schwenkbewegung des Deckels (14) um das Schwenkelement (15) geführt, vorzugsweise gewickelt, werden kann.

6. Küchengerät (1) nach Anspruch 5,
wobei die Schwenkelementanbindung (18a) des Abtropfelements (18) mit demjenigen Teil des Schwenkelements (15) mitbeweglich verbunden ist, welcher mit dem Deckel (14) mitbeweglich verbunden ist.

7. Küchengerät (1) nach einem der vorangehenden Ansprüche,
wobei das Abtropfelement (18) zumindest abschnittsweise, vorzugweise im Wesentlichen, randseitig gegenüber dem Innenraum (12) wenigstens eine Kondensatführung (18c), vorzugsweise wenigstens eine seitliche Kante (18c), aufweist, welche ausgebildet ist, aufgefangene Flüssigkeit, vorzugsweise mittig, in den Innenraum (12), vorzugweise in einen Abfluss (17), zu leiten.

8. Küchengerät (1) nach einem der vorangehenden Ansprüche,
wobei das Abtropfelement (18) zumindest abschnittsweise, vorzugsweise vollflächig, eine Führungsfläche (18b), vorzugsweise als Gefälle (18b), aufweist, welche ausgebildet ist, aufgefangene Flüssigkeit, vorzugsweise mittig, in den Innenraum (12), vorzugweise in einen Abfluss (17), zu leiten.

9. Küchengerät (1) nach Anspruch 8,
wobei die Führungsfläche (18b) des Abtropfelements (18) zumindest abschnittsweise, vorzugsweise vollflächig, wenigstens eine Kondensatführung (18d), vorzugsweise wenigstens ein Leitelement (18d) als Vertiefung und/oder als Erhebung, aufweist, welche ausgebildet ist, aufgefangene Flüssigkeit, vorzugsweise mittig, in den Innenraum (12), vorzugweise in einen Abfluss (17), zu leiten.

10. Küchengerät (1) nach einem der vorangehenden Ansprüche,
wobei das Abtropfelement (18), vorzugsweise eine Führungsfläche (18b) des Abtropfelements (18), vorzugsweise mittig, wenigstens einen, vorzugsweise dreieckigen oder geschwungenen, Auslass (18e) aufweist, welcher ausgebildet ist, aufgefangene Flüssigkeit in den Innenraum (12), vorzugweise in einen Abfluss (17), zu leiten.

11. Küchengerät (1) nach einem der vorangehenden Ansprüche,
wobei das Schwenkelement (15) zumindest abschnittsweise, vorzugweise im Wesentlichen, randseitig seitlich wenigstens eine Kondensatführung (15a), vorzugsweise wenigstens eine seitliche Kante (15a), aufweist, welche ausgebildet ist, aufgefangene Flüssigkeit zum Abtropfelement (18) hin zu leiten.

12. Küchengerät (1) nach einem der vorangehenden Ansprüche,
wobei das Schwenkelement (15) zumindest abschnittsweise, vorzugsweise vollflächig, wenigstens eine Kondensatführung (15b), vorzugsweise wenigstens ein Leitelement (15b) als Vertiefung und/oder als Erhebung, aufweist, welche ausgebildet ist, aufgefangene Flüssigkeit, vorzugsweise mittig, zum Abtropfelement (18) hin zu leiten.

13. Küchengerät (1) nach einem der vorangehenden Ansprüche,
wobei das Küchengerät (1) als Schublade ausgebildet ist.

## Claims

1. Kitchen appliance (1), preferably kitchen appliance (1) having a steam function, particularly preferably a steam drawer (1),
comprising an interior chamber (12), preferably a cooking chamber (12), which is designed to receive at least one cooking utensil and/or at least one food item through an access opening (13) from above, and
comprising a lid (14) which is designed to close and open the access opening (13) of the interior chamber (12) from above by pivoting by means of a pivoting element (15), preferably a hinge (15),
**characterised by**
at least one drip element (18) which is designed and arranged to collect liquid, in particular condensate, running down the underside (14a) of the raised lid (14), and to conduct it into the interior chamber (12), preferably into a drain (17),
wherein the drip element (18) is designed to be moved away from the raised lid (14) and towards the raised lid (14) in portions over the access opening (13) of the interior chamber (12).

2. Kitchen appliance (1) according to claim 1,
wherein the drip element (18) is designed
to fully open the interior chamber (12) when the lid (14) is closed and,
when the lid (14) is open, to protrude sufficiently far along the access opening (13) of the interior chamber (12) in order to conduct collected liquid into the interior chamber (12), preferably into a drain (17).

3. Kitchen appliance (1) according to either claim 1 or claim 2,
wherein the drip element (18) is designed to be moved by means of a drive element, preferably in a translatory manner.

4. Kitchen appliance (1) according to claim 3,
wherein the drive element is arranged on the underside (14a) of the lid (14) and is designed to move the drip element (18) substantially perpendicularly relative to the underside (14a) of the lid (14).

5. Kitchen appliance (1) according to either claim 1 or claim 2,
wherein the drip element (18) is connected to the pivoting element (15) by means of a pivoting element connection (18a) in such a way that the drip element (18) can be guided, preferably wound, around the pivoting element (15) in accordance with the pivoting movement of the lid (14).

6. Kitchen appliance (1) according to claim 5,
wherein the pivoting element connection (18a) of the drip element (18) is connected, for movement therewith, to the part of the pivoting element (15) which is connected, for movement therewith, to the lid (14).

7. Kitchen appliance (1) according to any of the preceding claims,
wherein the drip element (18) comprises, at least in portions, preferably substantially, on the edge opposite the interior chamber (12), at least one condensate guide (18c), preferably at least one lateral edge (18c), which is designed to conduct collected liquid, preferably centrally, into the interior chamber (12), preferably into a drain (17).

8. Kitchen appliance (1) according to any of the preceding claims,
wherein the drip element (18) has, at least in portions, preferably over its entire surface, a guide surface (18b), preferably in the form of a gradient (18b), which is designed to conduct collected liquid, preferably centrally, into the interior chamber (12), preferably into a drain (17).

9. Kitchen appliance (1) according to claim 8,
wherein the guide surface (18b) of the drip element (18) comprises, at least in portions, preferably over its entire surface, at least one condensate guide (18d), preferably at least one conducting element (18d), in the form of a depression and/or a raised region, which is designed to conduct collected liquid, preferably centrally, into the interior chamber (12), preferably into a drain (17).

10. Kitchen appliance (1) according to any of the preceding claims,
wherein the drip element (18), preferably a guide surface (18b) of the drip element (18), preferably centrally, comprises at least one, preferably triangular or curved, outlet (18e), which is designed to conduct collected liquid into the interior chamber (12), preferably into a drain (17).

11. Kitchen appliance (1) according to any of the preceding claims,
wherein the pivoting element (15) comprises, at least in portions, preferably substantially, laterally on the edge side, at least one condensate guide (15a), preferably at least one lateral edge (15a), which is designed to conduct collected liquid towards the drip element (18).

12. Kitchen appliance (1) according to any of the preceding claims,
wherein the pivoting element (15) comprises, at least in portions, preferably over its entire surface, at least one condensate guide (15b), preferably at least one conducting element (15b), in the form of a depression and/or a raised projection, which is designed to conduct collected liquid, preferably centrally, towards the drip element (18).

13. Kitchen appliance (1) according to any of the preceding claims,
wherein the kitchen appliance (1) is designed as a drawer.

## Revendications

1. Appareil de cuisine (1), de préférence appareil de cuisine (1) avec fonction vapeur, de manière particulièrement préférée tiroir de cuisson à la vapeur (1),
comportant un espace intérieur (12), de préférence un espace de cuisson (12), qui est réalisé pour recevoir au moins un ustensile de cuisson et/ou au moins un aliment par le haut à travers une ouverture d'accès (13), et
comportant un élément de recouvrement (14) qui est réalisé pour fermer et libérer par le haut l'ouverture d'accès (13) de l'espace intérieur (12) par pivotement au moyen d'un élément de pivotement (15), de préférence une charnière (15),
**caractérisé par**
au moins un élément d'égouttage (18) qui est réalisé et disposé pour collecter le liquide, en particulier l'eau de condensation, qui s'écoule vers le bas sur le côté inférieur (14a) de l'élément de recouvrement (14) pivoté vers le haut et le diriger dans l'espace intérieur (12), de préférence dans une évacuation (17),
dans lequel l'élément d'égouttage (18) est réalisé pour être déplacé dans certaines sections sur l'ouverture d'accès (13) de l'espace intérieur (12) en s'éloignant de l'élément de recouvrement (14) pivoté vers le haut et en se rapprochant de l'élément de recouvrement (14) pivoté vers le haut.

2. Appareil de cuisine (1) selon la revendication 1,
dans lequel l'élément d'égouttage (18) est réalisé pour
libérer complètement l'espace intérieur (12) lorsque l'élément de recouvrement (14) est fermé, et
faire saillie suffisamment loin le long de l'ouverture d'accès (13) de l'espace intérieur (12) lorsque l'élément de recouvrement (14) est ouvert afin de diriger le liquide collecté dans l'espace intérieur (12), de préférence dans une évacuation (17).

3. Appareil de cuisine (1) selon la revendication 1 ou 2,
dans lequel l'élément d'égouttage (18) est réalisé pour être déplacé, de préférence en translation, au moyen d'un élément d'entraînement.

4. Appareil de cuisine (1) selon la revendication 3,
dans lequel l'élément d'entraînement est disposé sur le côté inférieur (14a) de l'élément de recouvrement (14) et est réalisé pour déplacer l'élément d'égouttage (18) sensiblement perpendiculairement par rapport au côté inférieur (14a) de l'élément de recouvrement (14).

5. Appareil de cuisine (1) selon la revendication 1 ou 2,
dans lequel l'élément d'égouttage (18) est relié à l'élément de pivotement (15) au moyen d'une liaison d'élément de pivotement (18a) de telle sorte que l'élément d'égouttage (18) peut être guidé, de préférence enroulé, autour de l'élément de pivotement (15) d'un manière correspondant au mouvement de pivotement de l'élément de recouvrement (14).

6. Appareil de cuisine (1) selon la revendication 5,
dans lequel la liaison d'élément de pivotement (18a) de l'élément d'égouttage (18) est reliée de manière à pouvoir se déplacer avec la partie de l'élément de pivotement (15) qui est reliée de manière à pouvoir se déplacer avec l'élément de recouvrement (14).

7. Appareil de cuisine (1) selon l'une des revendications précédentes,
dans lequel l'élément d'égouttage (18) présente, au moins dans certaines sections, de préférence sensiblement, côté bord par rapport à l'espace intérieur (12), au moins un guide de condensat (18c), de préférence au moins un bord latéral (18c), lequel guide de condensat est réalisé pour diriger le liquide collecté, de préférence au centre, dans l'espace intérieur (12), de préférence dans une évacuation (17).

8. Appareil de cuisine (1) selon l'une des revendications précédentes,
dans lequel l'élément d'égouttage (18) présente, au moins dans certaines sections, de préférence sur toute sa surface, une surface de guidage (18b), de préférence sous forme de pente (18b), laquelle est réalisée pour diriger le liquide collecté, de préférence au centre, dans l'espace intérieur (12), de préférence dans une évacuation (17).

9. Appareil de cuisine (1) selon la revendication 8,
dans lequel la surface de guidage (18b) de l'élément d'égouttage (18) présente, au moins dans certaines sections, de préférence sur toute sa surface, au moins un guide de condensat (18d), de préférence au moins un élément de direction (18d) sous forme d'évidement et/ou d'élévation, lequel guide de condensat est réalisé pour diriger le liquide collecté, de préférence au centre, dans l'espace intérieur (12), de préférence dans une évacuation (17).

10. Appareil de cuisine (1) selon l'une des revendications précédentes,
dans lequel l'élément d'égouttage (18), de préférence une surface de guidage (18b) de l'élément d'égouttage (18), présente, de préférence au centre, au moins une sortie (18e), de préférence triangulaire ou incurvée, laquelle sortie est réalisée pour diriger le liquide collecté dans l'espace intérieur (12), de préférence dans une évacuation (17).

11. Appareil de cuisine (1) selon l'une des revendications précédentes,
dans lequel l'élément de pivotement (15) présente latéralement, au moins dans certaines sections, de préférence sensiblement, côté bord, au moins un guide de condensat (15a), de préférence au moins un bord latéral (15a), lequel guide de condensat est réalisé pour diriger le liquide collecté vers l'élément d'égouttage (18).

12. Appareil de cuisine (1) selon l'une des revendications précédentes,
dans lequel l'élément de pivotement (15) présente, au moins dans certaines sections, de préférence sur toute sa surface, au moins un guide de condensat (15b), de préférence au moins un élément de direction (15b) sous forme d'évidement et/ou d'élévation, lequel guide de condensat est réalisé pour diriger le liquide collecté, de préférence au milieu, vers l'élément d'égouttage (18).

13. Appareil de cuisine (1) selon l'une des revendications précédentes,
dans lequel l'appareil de cuisine (1) est réalisé sous forme de tiroir.
